(19) Europäisches Patentamt
European Patent Office
Office européen des brevets

(11) **EP 0 640 386 B1**

(12) **EUROPÄISCHE PATENTSCHRIFT**

(45) Veröffentlichungstag und Bekanntmachung des Hinweises auf die Patenterteilung:
**30.10.1996 Patentblatt 1996/44**

(51) Int. Cl.$^6$: **B01J 21/06**, B01J 23/22, B01J 23/28, B01J 23/30, B01D 53/56, C01G 23/053

(21) Anmeldenummer: **94109282.7**

(22) Anmeldetag: **16.06.1994**

(54) **Verfahren zur Herstellung von Mischoxidpulvern für Entstickungskatalysatoren**

Process for the production of mixed oxides powders for denitration catalysts

Procédé de préparation de poudres d'oxydes mixtes pour des catalyseurs de dénitration

(84) Benannte Vertragsstaaten:
**DE ES FR GB IT**

(30) Priorität: **29.06.1993 DE 4321555**

(43) Veröffentlichungstag der Anmeldung:
**01.03.1995 Patentblatt 1995/09**

(73) Patentinhaber: **BAYER AG**
**51368 Leverkusen (DE)**

(72) Erfinder:
• **Bütje, Kai, Dr.**
**D-47229 Duisburg (DE)**
• **Kischkewitz, Jürgen, Dr.**
**D-40883 Ratingen (DE)**
• **Braun, Rolf Michael, Dr.**
**D-47802 Krefeld (DE)**
• **Holtmann, Udo, Dr.**
**D-47800 Krefeld (DE)**
• **Barenthien, Peter-Joachim**
**D-47239 Duisburg (DE)**

(56) Entgegenhaltungen:
EP-A- 0 348 768          EP-A- 0 371 329
EP-A- 0 547 663          DE-A- 3 439 217
FR-A- 2 219 117          FR-A- 2 677 012

**Beschreibung**

Die vorliegende Erfindung betrifft ein Verfahren zur Herstellung von Mischoxidpulvern für Katalysatoren zur Entfernung von Stickoxiden aus Rauchgasen (Denox-Katalysatoren).

Unter den verschiedenen Verfahren, die zur Entfernung von Stickoxiden aus Rauchgasen (Denitrierung) vorgeschlagen worden sind, hat sich die selektive katalytische Reduktion (SCR) mit Ammoniak an Mischoxid-Katalysatoren z.B. gemäß

$$4 \, NO + 4 \, NH_3 + O_2 \rightarrow 4 \, N_2 + 6 \, H_2O$$

im großtechnischen Maßstab weitgehend durchgesetzt.

Nach DE 2 458 888 bestehen die für die katalytische Reduktion geeigneten Katalysatoren aus

(A) Ti in Form von Oxiden,

(B) wenigstens einem Metall aus der Gruppe

B-1 Fe und V in Form von Oxiden und/oder Sulfaten, und/oder der Gruppe
B-2 Mo, W, Ni, Co, Cu, Cr und U in Form von Oxiden,

(C) Sn in Form von Oxiden,

(D) Metallen aus der Gruppe Ag, Be, Mg, Zn, B, Al, Y, Seltenerdmetalle, Si, Nb, Sb, Bi und Mn in Form von Oxiden,

wobei das Gewichtsverhältnis von A:B:C:D= 1:(0,01-10):(0-0,2):(0-0,15) beträgt. Zahlreiche spezielle Ausführungsformen zu diesen Katalysatoren sowie geringfügig abweichende Zusammensetzungen sind aus der weiteren Fachliteratur bekannt.

Besondere Bedeutung haben industriell solche Katalysatoren erlagt, die als Hauptbestandteil und Träger $TiO_2$ in der Anatasform und als katalytisch aktive Nebenbestandteile $V_2O_5$ sowie $MoO_3$ und/oder $WO_3$ enthalten. Solche Katalysatoren werden z.B. in der EP-A 472 014, EP-A 385 164 und EP-A 317 875 offenbart.

Die Herstellung der Katalysatoren kann prinzipiell nach jedem Verfahren erfolgen, das eine hinreichend innige Vermischung der Komponenten gewährleistet:

- die Komponenten werden in Lösung homogen vermischt und gemeinsam pyrolysiert oder gemeinsam als Hydroxide oder Carbonate gefällt, welche dann zu den Oxiden verglüht werden (homogenes Lösungs- bzw. Copräzipitierungsverfahren nach DE 2 458 888),

- ein Teil der Komponenten wird in gefällter Form, der andere als Lösung eingesetzt und gegebenenfalls ausgefällt, mit nachfolgender Kalzination (gleichzeitige Anwendung von Lösungs- und Präzipitierungsverfahren nach DE 2 458 888),

- Mischen der festen Oxidprecursoren (z.B. Hydroxide) und Pyrolyse (Präzipitat-Misch-Verfahren nach DE 2 458 888).

Das Mischen der geglühten Oxide durch gemeinsame Mahlung ist nach EP-A 385 164 unter den Gesichtspunkten des Energieverbrauchs und der Entwicklung von Lärm und Staub weniger vorteilhaft. Auch aus Gründen der homogenen Verteilung sind grundsätzlich solche Verfahren zu bevorzugen, bei denen mindestens eine der Komponenten in flüssiger, z.B. gelöster Form eingesetzt wird. Häufig wird mit einer Kombination von Lösungs- und Niederschlagsverfahren gearbeitet.

Das nach einem der oben erwähnten Verfahren erhaltene Mischoxidpulver wird üblicherweise nach der Zugabe von Wasser mit geeigneten Zusätzen, beispielsweise Tonen, Glasfasern, Porenbildnern und organischen Bindern, verknetet und zu Formkörpern, z.B. Platten oder Waben, verarbeitet und kalziniert.

Die Herstellung der Katalysatoren kann nach EP-A 390 059 auch in der Weise erfolgen, daß zunächst nur der $TiO_2$-Precursor mit einem $WO_3$- oder $MoO_3$-Precursor vermischt und zu einem $TiO_2/WO_3$- bzw. $TiO_2/MoO_3$-Mischoxidpulver verglüht wird, welches anschließend mit dem $V_2O_5$-Precursor vermischt und wie oben beschrieben zu Denox-Katalysatoren verarbeitet wird.

Im einzelnen ist zur Herstellung $TiO_2$-haltiger Mischoxidpulver für Denox-Katalysatoren aus der Fachliteratur eine Reihe von Beispielen bekannt, bei denen als Titanquelle wäßrige Titansalzlösungen, z.B. Titanchlorid- oder Titanylsulfatlösungen, eingesetzt werden. Typisch für diese Verfahren ist, daß als alkalisch reagierende Komponente zum Fällen eine wäßrige Ammoniaklösung verwendet wird.

So wird nach DE-A 2 458 888, EP-A 292 310 und EP-A 208 434 Orthotitansäure mit wäßriger Ammoniaklösung aus einer Titantetrachloridlösung ausgefällt und unter Zusatz von Molybdän-, Wolfram-, Vanadinoxid (bzw. der entsprechenden Precursoren) und z.T. weiteren Komponenten zu Katalysatoren verarbeitet.

Entsprechende Verfahren, bei denen die Orthotitansäure mit $NH_3$ aus einer dem Sulfatprozeß entstammenden Titanyl- oder Titansulfatlösung gefällt wird, sind in DE-A 2 458 888, EP-A 214 085, EP-A 256 359 und EP-A 472 014 angeführt.

Ähnliche Verfahren, bei denen als Träger nicht $TiO_2$, sondern ein Gemisch von $TiO_2$ und $SiO_2$ dient, wobei das $TiO_2$ aber ebenfalls durch Fällung mit $NH_3$ aus einer Titantetrachlorid- oder Titanylsulfatlösung gewonnen wird, sind in DE-A 3 619 337 und DE-A 3 438 367 genannt.

Weitere Verfahren zur Herstellung geeigneter Mischoxidpulver bzw. Katalysatoren mit $TiO_2$ als Hauptbestandteil gehen von Suspensionen von Titanoxidhydraten (Ortho-, Metatitansäure) aus, wie sie beispielsweise im Verlauf des Sulfatprozesses durch Hydrolyse von Titanylsulfatlösungen anfallen. Diese Hydrolysate enthalten, wie dem Fachmann bekannt ist, typischerweise zwischen 20 und 40 Gew.-% $TiO_2$ sowie zwischen 5 und 10 Gew.-% adsorbierte $H_2SO_4$ (bezogen auf $TiO_2$), wodurch sie mit pH-Werten um zwischen 1 und 2 deutlich sauer reagieren.

Für eine direkte Verarbeitung zu Mischoxidpulvern für Denox-Katalysatoren liegt dieser Sulfatgehalt zu hoch:

JP 02/083 034 lehrt, daß Mischoxidpulver aus $TiO_2$ und Oxiden des Vanadins, Wolframs oder Molybdäns bei Sulfatgehalten oberhalb 4,0 % zu einer unerwünschten Partikelaggregation neigen und daß ferner die mechanische Festigkeit des Katalysators vermindert wird.

Außerdem ist bekannt, daß Sulfationen aufgrund ihrer doppelt negativen Ladungen generell stark flockend auf Suspensionen wirken. Nach EP-A 214 085 und DE-A 2 658 569 ist es dagegen günstig, wenn das Hydrolysat vor der Verarbeitung in einem Solzustand vorliegt. Dies läßt sich z.B. durch die Zugabe von Bariumionen erreichen, welche einen Teil der prozeßbedingt anhaftenden Sulfationen in Form von unlöslichem Bariumsulfat ausfällen. Nachteilig ist hierbei jedoch, daß das Produkt dann katalytisch inaktives, nicht abtrennbares $BaSO_4$ enthält.

Nach EP-A 390 059 sowie EP-A 268 265 wird ein $TiO_2$ /$WO_3$ - bzw. $TiO_2$ /$MoO_3$ -Mischoxidpulver durch Zugabe von Ammoniak zu einer Ti-Oxidhydratslurry bis zu einem pH-Wert von 8,5, anschließende Zugabe von Ammoniumparawolframat bzw. -paramolybdat und nachfolgend Kalzinantion hergestellt. Der Zweck der Ammoniakzugabe bei diesem Verfahren besteht darin, den Sulfatgehalt zu senken, indem das vorher adsorptiv gebundene Sulfat in freies Ammoniumsulfat überführt wird, welches im Kalzinationsschritt absublimiert.

Allen bekannten Verfahren - sowohl denen, die von Titansalzlösungen als auch denen, die von Titandioxidhydrat-Suspensionen ausgehen - ist gemeinsam, daß als alkalisierende Komponente Ammoniak verwendet wird. Vom Standpunkt des Endproduktes aus hat Ammoniak prinzipiell den Vorteil, daß sich die bei der Fällung und Neutralisation, z.B. gemäß

$$TiCl_4 + 4\ NH_3 + 3\ H_2O \rightarrow TiO(OH)_2 + NH_4Cl\ x\ TiO(OH)_2\ {}^*\ y\ H_2SO_4 + 2\ y\ NH_3 \rightarrow TiO(OH)_2 + y\ (NH)_4SO_4$$

unter $x\ TiO(OH)_2\ {}^*y\ H_2SO_4$ ist eine Titandioxidhydrat-Suspension mit anhaftender Schwefelsäure aus dem Sulfatprozeß zu verstehen) als Nebenprodukte gebildeten Ammoniumsalze leicht durch Auswaschen und Kalzination abtrennen lassen, wobei als zusätzlicher positiver Effekt gegebenenfalls der Sulfatgehalt reduziert wird.

Vom Standpunkt des Gesamtverfahrens ist die Bildung von Ammoniumsalzen jedoch ausgesprochen negativ zu bewerten, da diese beispielsweise in den Kalzinationsschritten der in EP-A 390 059 und EP-A 268 265 offenbarten Verfahren zu Verstopfungs- und Korrosionsproblemen in den dazu benutzten Öfen führen. Ferner fallen als Nebenprodukte der zitierten Fällverfahren erhebliche Mengen verdünnter wäßriger Ammoniumchlorid- oder Ammoniumsulfatlösungen an, deren umweltgerechte Entsorgung einen beträchtlichen Aufwand erfordert.

Verfahren, in denen zur Fällung und Neutralisation eine Alkalilauge, beispielsweise Natronlauge, anstelle von Ammoniak eingesetzt werden kann, sind zwar in DE 2 458 888 prinzipiell erwähnt, aber nie praktisch in Erwägung gezogen oder durchgeführt worden, obwohl neben dem Preisvorteil durch die Verwendung der im Vergleich zu Ammoniak wesentlich billigeren Natronlauge ein solches Verfahren auch große Vorteile in ökologischer Hinsicht bieten würde, da anstelle von Ammoniumchlorid- und -sulfatlösungen weniger problematische Natriumchlorid-und -sulfatlösungen anfallen würden, die beispielsweise durch eine Elektrolyse entsorgt werden könnten.

Dieses am Rande erwähnte Verfahren ist auch deshalb nie durchgeführt worden, weil aus EP-A 159 959, DE-A 2 658 569 und Druckschriften von K. Limper ("SCR/SNCR-Verfahren zur $NO_x$-Minderung bei Kraftwerken/Großfeuerungsanlagen und Abfallverbrennungsanlagen- System Steinmüller", VDI-Bildungswerk, Verein Deutscher Ingenieure BW 86, S.11) und von F. Hilbrig ("Beiträge zur Natur von $TiO_2$ getragenem Wolframoxid", Dissertation, München 1989, S. 3) bekannt ist, daß Alkalimetalle Katalysatorgifte darstellen, die den Denitrierungsgrad mindern. Aus diesem Grund wurde bisher auch von vornherein ein möglichst niedriger Gehalt an Alkalimetallverbindungen in den Ausgangsprodukten angestrebt, zumal Alkalisalze im Gegensatz zu Ammoniumsalzen nicht ohne weiteres durch Sublimation entfernt werden können.

Diese Erkenntnisse haben in Fachkreisen zu der Überzeugung geführt, daß es nicht möglich ist, geeignete $TiO_2/MoO_3/WO_3/V_2O_5$-Mischoxidpulver für Entstickungskatalysatoren unter Verwendung von Alkalilaugen als alkalischer Komponente herzustellen, so daß bisher keine entsprechenden Verfahren hierzu entwickelt worden sind.

Aufgabe war es daher, ein Verfahren zur Verfügung zu stellen, das es gestattet, Mischoxidpulver für Denox-Katalysatoren einfach und kostengünstig, ohne die Nachteile der bisherigen Verfahren herzustellen.

Gegenstand der Erfindung ist ein Verfahren zur Herstellung von Mischoxidpulvern, die als Hauptbestandteil $TiO_2$ in der Anatasform und als Nebenbestandteile ein oder mehrere der katalytisch aktiven Oxide $MoO_3$, $WO_3$ und $V_2O_5$ enthalten, für Denox-Katalysatoren, welches dadurch gekennzeichnet ist, daß

a) eine schwefelsäurehaltige Titandioxidhydratsuspension mit Alkalilauge par tiell auf einen pH-Wert zwischen 4,0 und 6,0 bei Temperaturen zwischen 20 und 100°C neutralisiert wird,

b) die Suspension aus a) filtriert und der Filterkuchen intensiv gewaschen wird,

c) ein oder mehrere wasserlösliche Salze der Metalle Mo, W und V in fester oder gelöster Form zum Filterkuchen aus b) zugegeben werden und

d) der Filterkuchen aus c) getrocknet und bei Temperaturen zwischen 300 und 750°C kalziniert wird.

Als Ausgangsmaterial für das erfindungsgemäße Verfahren wird bevorzugt eine sulfathaltige Titandioxidhydrat-(z.B. Orthotitansäure- oder Metatitansäure-)suspension verwendet. Besonders bevorzugtes Ausgangsmaterial ist jedoch gereinigtes, sog. gebleichtes $TiO_2$-Hydrolysat aus dem Sulfatprozeß, wie es in Ullmanns Enzyklopädie der technischen Chemie, 4. Aufl., Bd.18, S. 576 beschrieben ist. Derartige Hydrolysatsuspensionen enthalten vorzugsweise 20 bis 40 Gew.-% Feststoff.

Im ersten Schritt des erfindungsgemäßen Verfahrens erfolgt eine partielle Neutralisation des Hydrolysates mit einer Alkalilauge, wobei aus wirtschaftlichen Gründen bevorzugt Natronlauge eingesetzt wird. Es ist besonders günstig, die Neutralisation unter intensiver Vermischung und Messung des pH-Wertes durchzuführen.

Das wesentliche Merkmal im ersten Verfahrensschritt ist, daß die partielle Neutralisation bis zu einem pH-Wert im schwach sauren Bereich, d.h. zwischen 4,0 und 6,0, erfolgt. Bei niedrigeren pH-Werten ist mit zu hohen Sulfatgehalten sowie mit der Ausfällung von wasserhaltigem $MoO_3$, $WO_3$ bzw. $V_2O_5$ bei der in einem späteren Schritt erfolgenden Zugabe löslicher Molybdate, Wolframate bzw. Vanadate zu rechnen, wodurch die Homogenität des Produktes leidet. Bei höheren pH-Werten werden dagegen Alkali-Kationen, z.B. Natriumionen, in unakzeptablem Maß vom Titandioxidhydrat adsorbiert; ferner sinkt der Sulfatgehalt zu stark ab, von dem aus EP-B 264 000 bekannt ist, daß er erforderlich ist, um die bevorzugte Anatasmodifikation gegen die unerwünschte Rutilisierung zu stabilisieren.

Die Temperatur kann bei der Teilneutralisation zwischen 20°C und 100°C liegen; besonders bevorzugt wird jedoch zwischen ca. 30°C und 60°C gearbeitet.

Im zweiten Schritt des erfindungsgemäßen Verfahrens erfolgt die Filtration und sorgfältige Auswaschung des teilweise neutralisierten Hydrolysates. Hierzu kann im Prinzip jede Einrichtung verwendet werden, die ein sehr intensives Waschen feiner Niederschläge ermöglicht. Dem Fachmann ist eine Reihe geeigneter Verfahren sowie Apparate bekannt, beispielsweise die Filtration über eine Filterpresse oder über ein Vakuumdrehfilter, die Moore-Filtration sowie die Querstromfiltration.

Für den technischen Maßstab eignet sich insbesondere die Filtration und Waschung über ein Vakuumdrehfilter unter Verwendung von heißem vollentsalztem Wasser. Es wurde gefunden, daß es mit dieser Anordnung gelingt, den Natriumgehalt von ca. 3 % (unmittelbar nach der partiellen Neutralisation und bezogen auf $TiO_2$) auf unerwartet niedrige Werte in der Größenordnung von weniger als 50 ppm zu reduzieren.

Das partiell neutralisierte, filtrierte und gewaschene Hydrolysat wird anschließend in vollentsalztem Wasser suspendiert und mit der gewünschten Menge $MoO_3$, $WO_3$ oder $V_2O_5$ in Form geeigneter wasserlöslicher Salze versetzt und gut vermischt. Bevorzugt werden Ammoniumsalze der entsprechenden Mono- bder Isopolyanionen verwendet, z.B. Ammoniumheptamolybdat, Ammoniumpara- oder - metawolframat und Ammoniummetavanadat. Es können sowohl die festen Salze als auch Lösungen eingesetzt werden.

Die so behandelte Suspension wird dann getrocknet, z.B. durch Sprühtrocknung, und das getrocknete Material geglüht, beispielsweise in einem Drehrohrofen. Durch Kalzination bei verschiedenen Temperaturen zwischen 300°C und 750°C lassen sich Produkte mit einem weiten Spektrum von BET-Oberflächen zwischen 50 und 200 $m_2/g$ gewinnen.

Die erhaltenen Mischoxidpulver können in bekannter Weise zu Denox-Katalysatoren verarbeitet werden.

Die Erfindung soll anhand der nachfolgenden Beispiele näher erläutert werden.

**Beispiel** (erfindungsgemäß)

10,5 kg einer betriebsüblichen, gebleichten Titandioxidhydratsuspension aus dem Sulfatprozeß mit einem $TiO_2$-Gehalt von 30,2 Gew.-%, entsprechend 3 170 g $TiO_2$, wurden mit vollentsalztem Wasser auf 20 Gew.-% verdünnt, auf 60°C erwärmt und in einem mit Rührer und pH-Elektrode ausgestatteten Becherglas mit konzentrierter Natronlauge (52 Gew.-% NaOH) auf einen pH-Wert von 4,0 (bei 60°C) eingestellt. Der Verbrauch betrug insgesamt 14,24 g NaOH kg $TiO_2$.

Das $TiO_2$-Hydrat wurde anschließend portionsweise über dem Fachmann bekannte Polyester-Filtertücher abgesaugt und gründlich mit 80°C heißem VE-Wasser gewaschen. Die gesammelten Filterkuchen wurden mit VE-Wasser zu einer Suspension mit einem $TiO_2$-Gehalt von 20 % angemischt.

1 455 g der Suspension, entsprechend 291 g $TiO_2$, wurden auf 60°C erwärmt, mit 35,9 g festem Ammoniumparawolframat (89,1 Gew.-% $WO_3$) versetzt und nach einstündigem Rühren am Rotationsverdampfer bei max. 50°C Badtemperatur aufkonzentriert. Der Rückstand wurde 18 Std. bei 130°C getrocknet.

60,0 g dieses Zwischenproduktes wurden für eine Stunde in einem Quarzkolben unter Drehen bei 600°C kalziniert. Es wurden 55,0 g eines zur Herstellung von Denox-Katalysatoren geeigneten $TiO_2/Wo_3$-Pulvers erhalten, dessen Analysendaten der Tabelle zu entnehmen sind.

Aus der Differenz der analytisch bestimmten $NH_3$-Gehalte vor und nach der Kalzination wurde berechnet, wieviel $NH_3$ (bzw. Ammoniumsalze) während der Kalzination emittiert wurde. Diese spezifische $NH_3$-Emission, bezogen auf 1 kg kalziniertes Endprodukt, ist in der Tabelle angegeben.

**Vergleichsbeispiel** (gemäß EP-A 390 059, Beispiel 1)

Die im o.a. Beispiel aufgeführte betriebsübliche, gebleichte Titandioxidhydratsuspension aus dem Sulfatprozeß mit 30,2 Gew.-% $TiO_2$ wurde zunächst mit vollentsalztem (VE-)Wasser auf 30,0 Gew.-% verdünnt.

Gemäß EP-A 390 059, Beispiel 1, wurden 2 400 g dieser Suspension, entsprechend 720 g $TiO_2$, mit wäßriger Ammoniaklösung versetzt, um einen pH-Wert von 8,5 (bei RT, ca. 30°C) einzustellen. Hierzu wurden 111,4 g einer konzentrierten wäßrigen $NH_3$-Lösung (30 Gew.-%) verbraucht. Nach der Zugabe von 90,0 g festem Ammoniumparawolframat (89,1 Gew.-% $WO_3$) und einstündigem Kneten wurde die Mischung am Rotationsverdampfer bei max. 60°C Badtemperatur aufkonzentriert und bei 130°C getrocknet.

60,0 g dieses Zwischenproduktes wurden für eine Stunde in einem Quarzkolben unter Drehen bei 600°C kalziniert. (Entgegen der Vorschrift aus EP-A 390 059 wurde die Kalzinationsdauer aus Maßstabsgründen gesenkt). Es wurden 54,3 g eines zur Herstellung von Denox-Katalysatoren geeigneten $TiO_2/Wo_3$-Pulvers erhalten, dessen Analysendaten der Tabelle zu entnehmen sind. Die dort angegebene spezifische $NH_3$-Emission wurde aus der Differenz der $NH_3$-Gehalte vor und nach der Kalzination bestimmt.

Tabelle

| Analysendaten der $TiO_2/WO_3$-Pulver | | | |
|---|---|---|---|
| | | Beispiel | Vergleich |
| $Na_2O$ | [ppm] | 20 | 22 |
| $SO_4^{2-}$ | {%] | 2,66 | 2,75 |
| BET | [m$^2$/g] | 87 | 81 |
| spez. $NH_3$-Emission | [g $NH_3$/kg Endprodukt] | 6,0 | 24,3 |

Die Analysendaten zeigen, daß es nach dem erfindungsgemäßen Verfahren möglich ist, ein dem Stand der Technik entsprechendes, für die Herstellung von Denox-Katalysatoren geeignetes Mischoxidpulver zu erhalten.

Der Gehalt an schädlichem Natrium liegt nach dem erfindungsgemäßen Verfahren trotz der Verwendung von Natronlauge überraschenderweise ähnlich niedrig und damit günstig wie nach dem Stand der Technik. Der Sulfatgehalt liegt, wie von JP 02/083034 gefordert, unter 4 %. Die spezifische Oberfläche beider Pulver ist vergleichbar. Der Vorteil des erfindungsgemäßen Verfahrens zeigt sich an der spezifischen $NH_3$-Emission bei der Kalzination; im vorliegenden Beispiel verringert sich die Belastung des Abgases und Abwassers des Kalzinationsofens mit ökoligisch unerwünschtem $NH_3$ bzw. korrodierendem Ammoniumsalzen um nicht weniger als 75 %.

**Patentansprüche**

1. Verfahren zur Herstellung von Mischoxidpulvern, die als Hauptbestandteil $TiO_2$ in der Anatasform und als Nebenbestandteile ein oder mehrere der katalytisch aktiven Oxide $MoO_3$, $WO_3$ und $V_2O_5$ enthalten, für Denox-Katalysa- toren, dadurch gekennzeichnet, daß

    a) eine schwefelsäurehaltige Titandioxidhydratsuspension mit Alkalilauge partiell auf einen pH-Wert zwischen 4,0 und 6,0 bei Temperaturen zwischen 20 und 100°C neutralisiert wird,

    b) die Suspension aus a) filtriert und der Filterkuchen intensiv gewaschen wird,

    c) ein oder mehrere wasserlösliche Salze der Metalle Mo, W und V infester oder gelöster Form zum Filterkuchen aus b) zugegeben werden und

    d) der Filterkuchen aus c) getrocknet und bei Temperaturen zwischen 300 und 750°C kalziniert wird.

2. Verfahren gemäß Anspruch 1, dadurch gekennzeichnet, daß als schwefelsäurehaltige Titandioxidhydratsuspension eine gebleichte Hydrolysatsuspension aus dem $TiO_2$-Herstellungsprozeß nach dem Sulfatverfahren eingesetzt wird.

3. Verfahren gemäß Anspruch 2, dadurch gekennzeichnet, daß die gebleichte Hydrolysatsuspension 20 bis 40 Gew.- % Feststoff enthält.

4. Verfahren gemäß Anspruch 1, dadurch gekennzeichnet, daß als Alkalilauge Natronlauge eingesetzt wird.

5. Verfahren gemäß Anspruch 1, dadurch gekennzeichnet, daß die Filtration und Waschung im Schritt b) in einem Vakuumdrehfilter erfolgt.

6. Verfahren gemäß Anspruch 1, dadurch gekennzeichnet, daß die Trocknung im Schritt d) in Form einer Sprühtrocknung erfolgt.

7. Verfahren gemäß Anspruch 1, dadurch gekennzeichnet, daß die wasserlöslichen Salze in Schritt c) aus der Gruppe der Ammoniumsalze der Mono- und Isopolyanionen von Mo(VI), W(VI) und V(V) sind.

**Claims**

1. Process for the production of mixed oxide powders containing, as their principal constituent, $TiO_2$ in anatase form and, as subsidiary constituents, one or more of the catalytically active oxides $MoO_3$, $WO_3$ and $V_2O_5$, for denox cat- alysts, characterised in that

    a) a titanium dioxide hydrate suspension containing sulphuric acid is partially neutralised with an alkali metal hydroxide solution to a pH value of between 4.0 and 6.0 at temperatures of between 20 and 100°C,

    b) the suspension from a) is filtered and the filter cake thoroughly washed,

    c) one or more water-soluble salts of the metals Mo, W and V are added in solid or dissolved form to the filter cake from b) and

    d) the filter cake from c) is dried and calcined at temperatures of between 300 and 750°C.

2. Process according to claim 1, characterised in that the titanium dioxide hydrate suspension containing sulphuric acid which is used is a bleached hydrolysate suspension from the $TiO_2$ production process using the sulphate process.

3. Process according to claim 2, characterised in that the bleached hydrolysate suspension contains 20 to 40 wt.% of solids.

4. Process according to claim 1, characterised in that sodium hydroxide solution is used as the alkali metal hydroxide solution.

**5.** Process according to claim 1, characterised in that filtration and washing in stage b) are performed in a rotary vacuum filter.

**6.** Process according to claim 1, characterised in that drying in stage d) proceeds by spray drying.

**7.** Process according to claim 1, characterised in that the water soluble salts in stage c) are selected from the group comprising the ammonium salts of the mono- and isopolyanions of Mo(IV), W(VI) and V(V).

**Revendications**

**1.** Procédé pour la préparation de poudres d'oxydes mélangés contenant en tant que constituant principal $TiO_2$ sous la forme anatase et en tant qu'autres constituants un ou plusieurs des oxydes possédant l'activité catalytique $MoO_3$, $WO_3$ et $V_2O_5$, pour catalyseurs Dénox, caractérisé en ce que

a) on neutralise partiellement jusqu'à un pH de 4,0 à 6,0, à des températures de 20 à 100°C, une suspension de dioxyde de titane hydraté contenant de l'acide sulfurique, à l'aide d'une lessive alcaline,
b) on filtre la suspension obtenue en a) ci-dessus et on soumet le gâteau de filtration à lavage intensif,
c) on ajoute au gâteau de filtration obtenu en b) un ou plusieurs sels solubles dans l'eau des métaux Mo, W et V à l'état solide ou à l'état de solutions et
d) on sèche le gâteau de filtration obtenu en c) et on le calcine à des températures de 300 à 750°C.

**2.** Procédé selon la revendication 1, caractérisé en ce que l'on met en oeuvre, en tant que suspension de dioxyde de titane hydraté contenant de l'acide sulfurique, une suspension d'hydrolysat blanchie provenant de la fabrication de $TiO_2$ par le procédé au sulfate.

**3.** Procédé selon la revendication 2, caractérisé en ce que la suspension d'hydrolysat blanchie contient 20 à 40% en poids de matières solides.

**4.** Procédé selon la revendication 1, caractérisé en ce que la lessive alcaline mise en oeuvre est la lessive de soude.

**5.** Procédé selon la revendication 1, caractérisé en ce que la filtration et le lavage du stade b) sont réalisés dans un filtre rotatif sous vide.

**6.** Procédé selon la revendication 1, caractérisé en ce que le séchage du stade d) est un séchage par atomisation.

**7.** Procédé selon la revendication 1, caractérisé en ce que les sels hydrosolubles utilisés au stade c) sont choisis dans le groupe des sels d'ammonium des mono- et isopolyanions de Mo (VI), W (VI) et V (V).